# EUROPEAN PATENT APPLICATION

(11) **EP 0 539 008 A2**
(43) Date of publication of application: **28.04.1993**
(21) Application number: 92308336.4
(22) Date of filing: 14.09.1992
(51) Int. Cl.: H04N 9/80, H04N 9/79

(54) **Recording and reproducing system for high definition color video signal**

(30) Priority: 24.10.1991 JP 278034/91
(71) Applicant: PIONEER ELECTRONIC CORPORATION, Meguro-ku Tokyo-to (JP)
(72) Inventor: Tozaki, Akihiro, Tokorozawa-City, Saitama (JP); Sugihara, Motooki, Tokorozawa-City, Saitama (JP)
(74) Representative: Tomlinson, Kerry John

(57) **Abstract**

An apparatus for recording and reproducing a high vision signal in which the costs can be reduced and the vertical blanking periods can be easily and effectively utilized. When the compound signals obtained by separating the high vision signal are recorded as three channel signals ((A),(B),(C)), the luminance component (Y) and the color difference component (PB,PR) which are present in each of the compound horizontal scan lines of the three channel signals ((A),(B),(C)) have equal horizontal line numbers.

## Description

The present invention relates to a recording and reproducing system of a high definition color video signal.

For instance, a high definition color video signal (hereinafter, simply referred to as a high vision signal) which is called a high vision signal is constituted by 1125 number of horizontal scan lines (hereinafter, referred to as H lines) per frame and is distributed in a frequency band of, e.g., about 30 MHz. Such a wide band high vision signal cannot be directly recorded onto an existing optical disk of a narrow band of, e.g., about 6 MHz. It is, therefore, considered to use a method of realizing a high density of a band compressed disk by digitization like the so-called MUSE system or the like.

A recording and reproducing system of a high vision signal by utilizing an existing disk player is disclosed in a Japanese Patent Application No. 2-143589 filed by the same Applicant as the present Application.

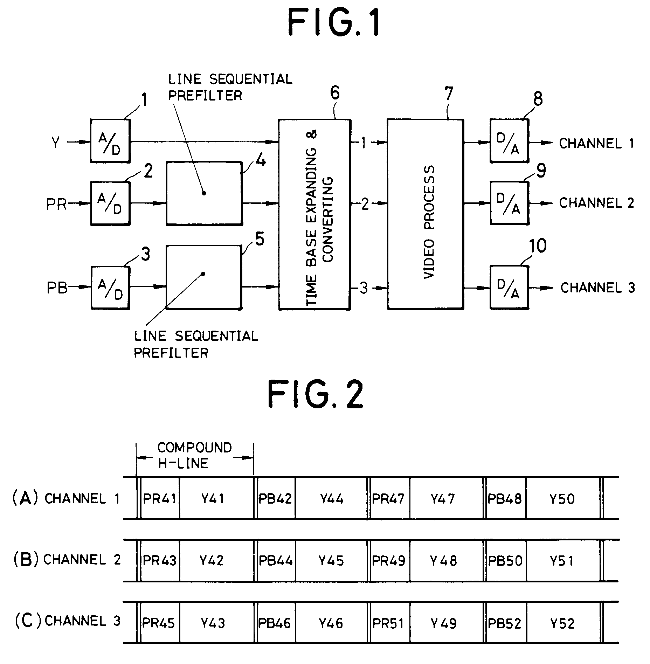

In the apparatus disclosed in the above Japanese Patent Application No. 2-143589, a luminance signal Y and color difference signals PR and PB are converted into three channel signals and transmitted or recorded by a transmitting apparatus as shown in Fig. 1. That is, the luminance signal Y and the color difference signals PR and PB as input signals are converted into the digital signals of, e.g., eight bits by A/D converters 1, 2, and 3, respectively. The bands of the color difference signals PR and PB are limited in the direction perpendicular to the screen by line sequential prefilters 4 and 5. With respect to the three digital signals derived in such a manner as mentioned above, the time bases are expanded and converted by a time base expanding and converting circuit 6. Three former half H intervals and three latter half H intervals among six continuous intervals of the luminance signal Y are distributed into three channels. Odd numbered H of the color difference signal PR and even numbered H of the color difference signal PB are similarly distributed to three channels, thereby forming channel signals. The above three combination signals are added with sync signals by a video processing circuit 7 and become three channel signals constituted by compound H lines such formats as shown in Fig. 2. The three channel signals are converted into the analog signals by D/A converters 8, 9, and 10 and recorded onto, for instance, different optical disks. Those analog signals may be recorded on three tracks of a single disk, if preferred.

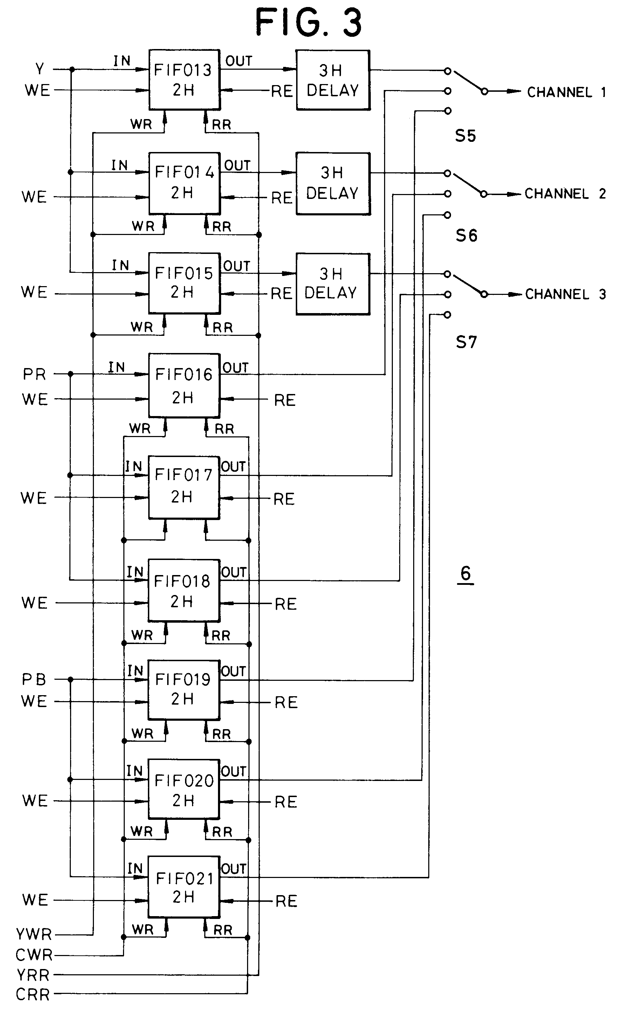

Fig. 3 shows a practical example of the time base expanding and converting circuit 6 in the recording apparatus shown in Fig. 1. The circuit 6 includes FIFOs 13 to 21 each having a capacity of two horizontal lines. Each FIFO has an input terminal IN, an output terminal OUT, a write enable terminal WE, a write reset terminal WR, a read enable terminal RE, and a read reset terminal RR. The luminance component of a component signal is supplied to the input terminal IN of each of the FIFOs 13 to 15. The output terminals OUT are connected to fixed contacts of switches S5 to S7 through a 3H delay circuit. The color difference signals PR and PB are supplied to the input terminals IN of the FIFOs 16 to 18 and the input terminals IN of the FIFOs 19 to 21. The output terminals OUT of the FIFOs 16 to 21 are connected to the fixed contacts of the switches S5 to S7.

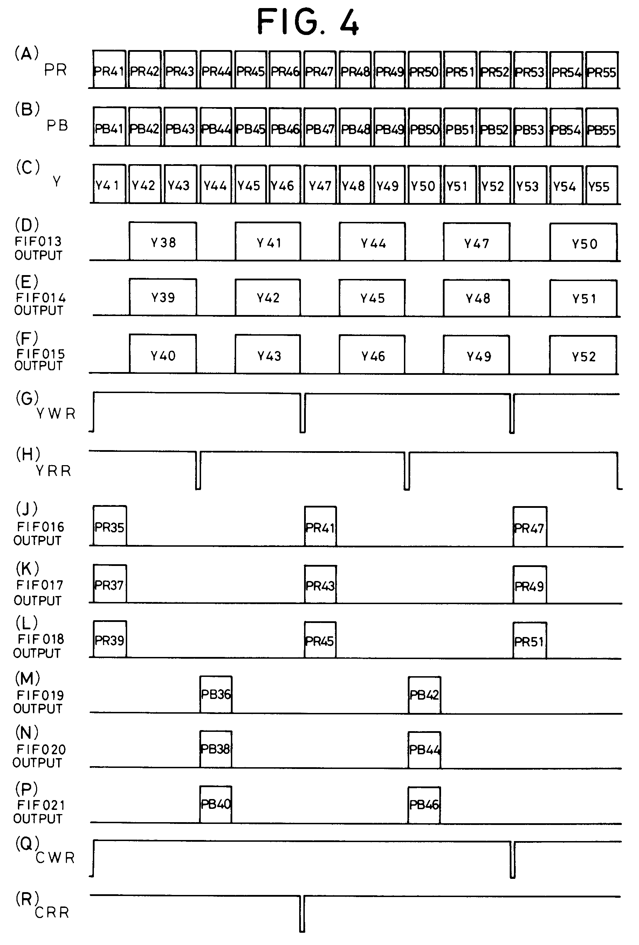

The operation of the time base expanding and converting circuit 6 shown in Fig. 3 will now be described with reference to Fig. 4.

When the component signals PR, PB, and Y as shown in Figs. 4(A) to 4(C) are supplied to the circuit 6, the write enable signal WE (not shown) is supplied to the FIFOs 13 to 15 synchronously with a horizontal sync signal. Each of the FIFOs 13 to 15 expands in time-base the luminance component by each 2H amount appearing every 3H lines of the supplied Y ans stores signal. The stored luminance components are triggered and read out by the read enable signal RE (not shown), thereby obtaining the luminance components as shown in Figs. 4(D) to 4(F). A luminance component write reset signal YWR and a luminance component read reset signal YRR as shown in Figs. 4(G) and 4(H) are alternately supplied to the FIFOs 13 to 15.

The write enable signal WE (not shown) is supplied to the FIFOs 16 to 18 and the color difference signal PR of H lines of an odd number is written therein. The color difference signal PB of H lines of an even number is similarly written into the FIFOs 19 to 21. The PR components are read out from the FIFOs 16 to 18 at timings as shown in Figs. 4(J) to 4(L). The PB components are likewise read out from the FIFOs 19 to 21 at timings as shown in Figs. 4(M) to 4(P). A color difference component write reset signal CWR and a color difference component read reset signal CRR as shown in Figs. 4(Q) and 4(R) are alternately supplied to the FIFOs 16 to 18 and the FIFOs 19 to 21.

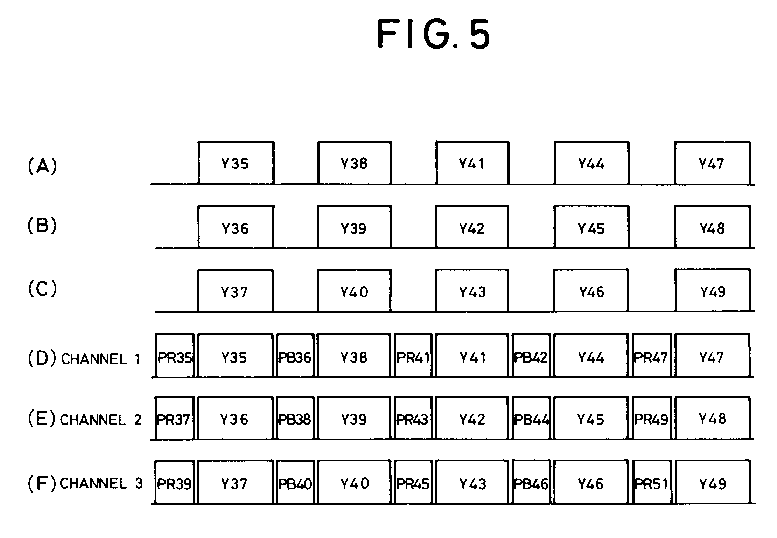

The Y components from the FIFOs 13 to 15 are delayed by an amount of 3H by the 3H delay circuit and become as shown in Figs 5(A), 5(B), and 5(C). Resultant channel 1, 2, and 3 signals have such formats as shown in Figs. 5(D), 5(E), and 5(F) respectively.

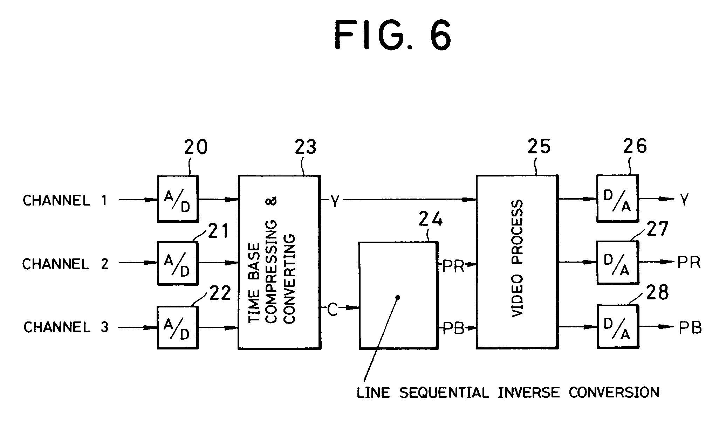

The three channel signals recorded on a recording medium are reproduced by a playing apparatus (not shown) and supplied to a reproducing apparatus which is shown in Fig. 6. After, in the reproducing apparatus, the input channel signals are first converted into the digital signals by A/D converters 20, 21, and 22, the luminance signal Y and a color signal C are obtained by a time base compressing and converting circuit 23. With respect to the color signal C, the color difference signals PR and PB are obtained by a line sequential inverse converting circuit 24. The color difference signals PR and PB obtained are processed by a video processing circuit 25 together with the luminance signal Y and, further, D/A converted into the original luminance signal Y and color difference signals PR and PB by D/A converters 26, 27, and 28.

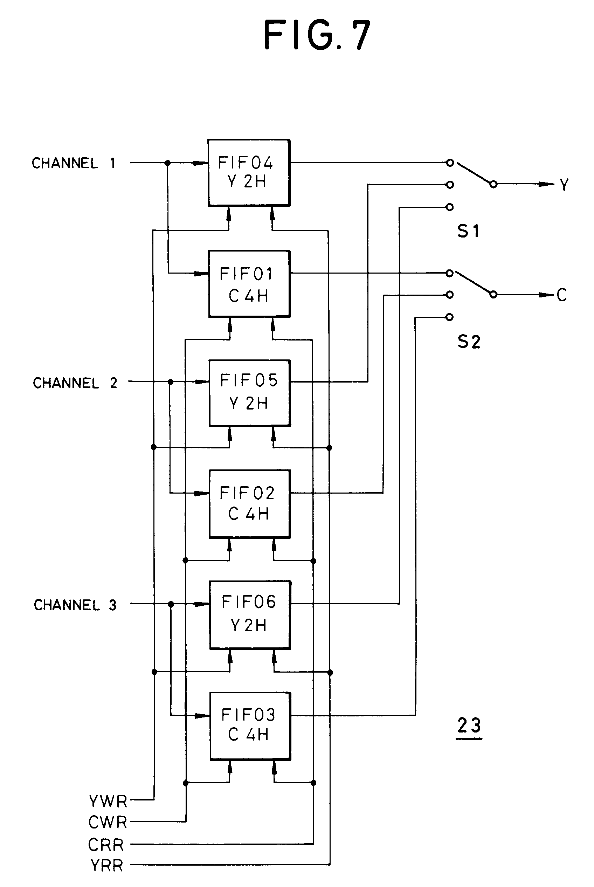

Fig. 7 shows an example of the time base compressing and converting circuit 23 on the reproducing side. In the circuit 23, the channel signals 1, 2, and 3 are respectively supplied to the FIFOs 4 and 1, FIFOs 5 and 2, and FIFOs 6 and 3. The write reset pulse YWR of the luminance signal Y is supplied to write reset terminals of the FIFOs 4, 5, and 6. The write reset pulse CWR of the color difference components is supplied to write reset terminals of FIFOs 1, 2, and 3. A read reset pulse YRR of the luminance signal Y is supplied to read reset terminals of the FIFOs 4, 5, and 6. The read reset pulse CRR of the color difference components is supplied to read reset terminals of the FIFOs 1, 2, and 3.

The Y components which have been extracted from the channel signals and time-base compressed by the FIFOs 4, 5, and 6 are generated as a continuous luminance signal Y by the switching operation of a switch S₁ by a drive signal synchronized with the reset pulse. The C components which have been extracted from the channel signals and time-base compressed by the FIFOs 1, 2, and 3 are converted into the line sequential processing color difference signal by the switching operation of a switch S₂ similar to the switch S₁ and generated.

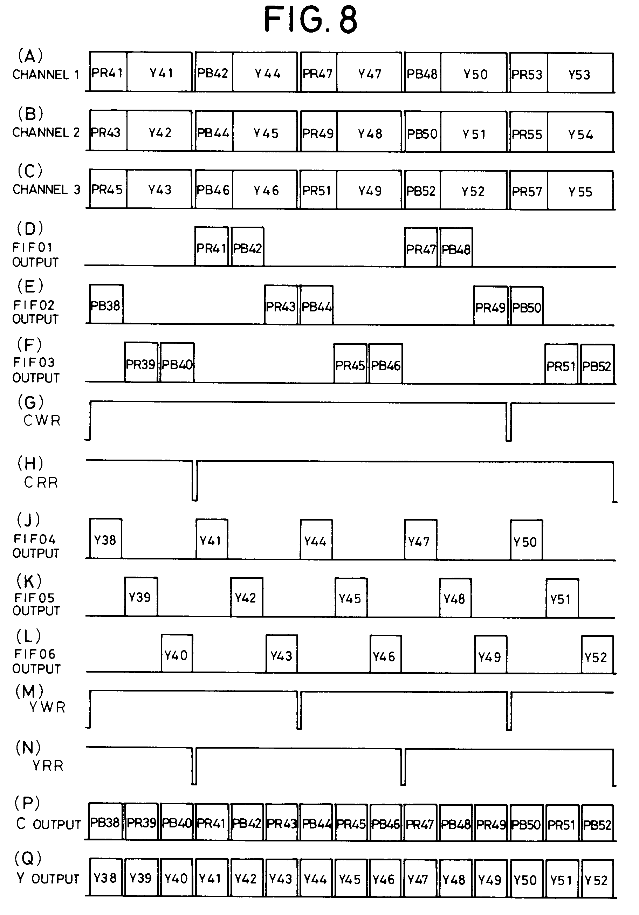

The operation of the time base compressing and converting circuit 23 in Fig. 6 mentioned above will now be described with reference to Fig. 8.

Figs. 8(A) to 8(C) show constructions of the signals of the channels 1, 2, and 3 on the time base similar to the constructions shown in Figs. 5(D) to 5(F). The FIFOs 1, 2, and 3 are controlled by the write reset pulse CWR and read reset pulse CRR of the color difference components shown in Figs. 8(G) and 8(H) and extract and produce color difference H-line signals PR₍₂ₙ₋₁₎ and PB₂ₙ (n is a natural number) as shown in Figs. 8(D), 8(E), and 8(F), respectively. In this instance, the time base compression of, for instance, 1/1.1 is further executed. The FIFOs 4, 5, and 6 are controlled by the write reset pulse YWR and read reset pulse YRR of the luminance signal shown in Figs. 8(M) and 8(N) and transmit a luminance H-line signal Yₙ (n is a natural number) as shown in Figs. 8(J), 8(K), and 8(L). Each of the FIFOs 4, 5, and 6 executes not only the time base conversion but also the time base compression of, e.g., 1/2.2. The luminance output signal transmitted through the switch S₁ has such a format as shown in Fig. 8(Q). The color output transmitted through the switch S₂ is has such a format shown in Fig. 8(P).

With respect to a capacity of each of the FIFOs 1 to 6 as memories the followings can be said. A set of components Y and C has a length which is three times as long as the length of those in the original high vision signal. Thus, each combination is made on a 3H-line unit basis with respect to Y. Each combination is made on a 6H-line unit basis with respect to C because the color signal C is constituted by the color difference signals PR and PB. Those Y and C compound signals are obtained from the three channel signals including such combinations as mentioned above. As also shown in Fig. 6, the FIFOs are made operative on a 6H-line unit basis with respect to Y and on a 12H-line unit basis with regard to C. The capacity of 2H lines, accordingly, is needed for each FIFO with respect to Y, while the capacity of 4H lines is necessary with regard to C.

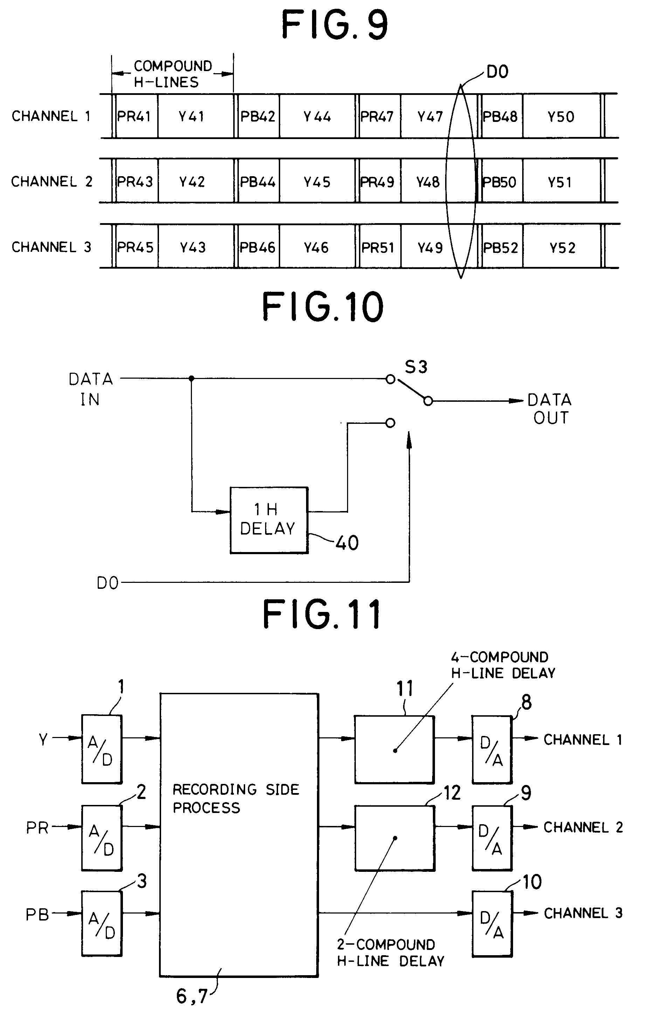

In case the above three channel signals are recorded onto the adjacent tracks on a single recording medium, another problem occurs in the drop-out correction for the channel signals upon reproduction. When, that is, there exists such a flaw DO as to cause a signal drop-out in the tracks on which the three channel signals are recorded as shown in Fig. 9, luminance H-line signals Y₄₇, Y₄₈, and Y₄₉ partly extinguishes. In such a case, it is imposible to perform enough correction by a drop-out circuit which includes a 1H delay circuit 40 and a change-over switch S3 shown in Fig. 10.

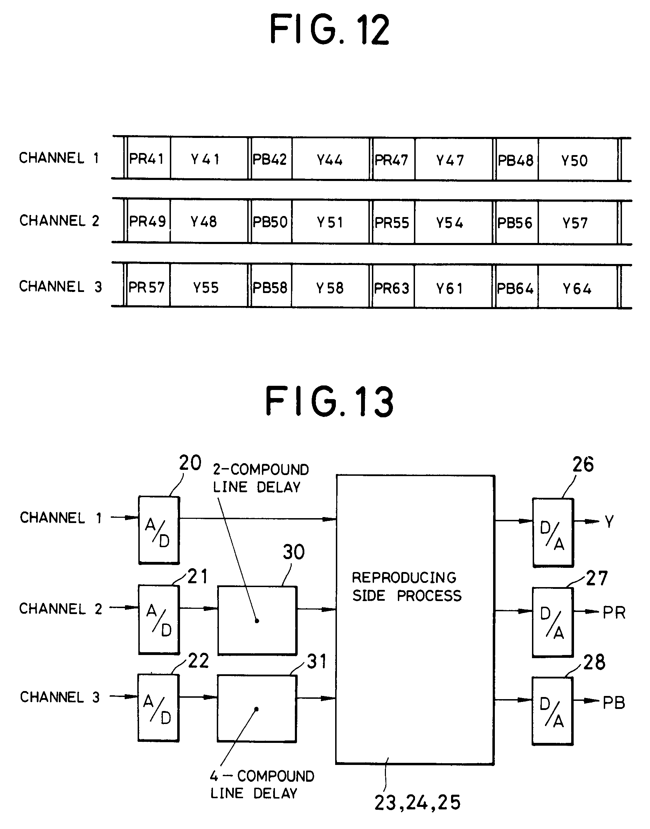

One of methods of solving the above problem is disclosed in Japanese Laid-Opoen (KOKAI) 2-180492. Although the content of the disclosure in the above publication is limited to the case of two channels, it can be further expanded to the case of three or more channels. When explaining the case of three channels as an example, on the recording side, those channel signals are recorded onto the recording medium by a color component signal recording apparatus as shown in Fig. 11. On the reproducing side, the channel signals are reproduced from the recording medium by a color component signal reproducing apparatus shown in Fig. 13. The recording apparatus has substantially the same construction as the recording apparatus of Fig. 1 except that a 4-compound H-line delay 11 and 2-compound H-line delay 12 are provided for the channel 1 signal and the channel 2 signal, respectively. The reproducing apparatus has substantially the same construction as the reproducing apparatus of Fig. 6 except that a 2-compound H-line delay 30 and a 4-compound H-line delay 31 are provided for the channel 2 signal and the channel 3 signal, respectively. By using the above recording and reproducing apparatus, such a situation that the adjacent lines are located at the same time point does not occur as seen from in Fig. 12 and enough correction can be assured.

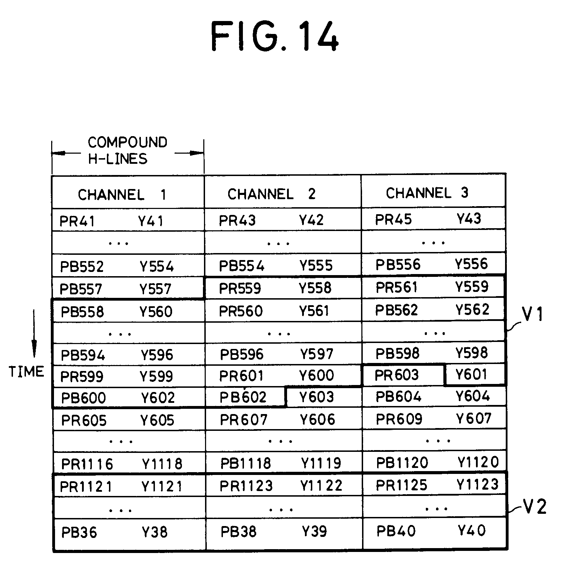

When the channel signals of the signal arrangement as shown in Fig. 2 are overlaid every compound H lines, such a construction as shown in Fig. 14 takes place on the recording medium. An interval between 558H to 602H and an interval between 1121H to 40H of the original high vision signal correspond to vertical blanking periods V₁ and V₂. Portions surrounded by thick solid lines in Fig. 14, therefore, indicate the vertical blanking periods. As will be obviously understood from the diagram, since the start time points of both of the vertical blanking periods V₁ and V₂ deviate from each other on the time base, so that it is difficult to use all of the H lines to which the vertical blanking periods belong if it is intended to insert an audio data signal and a control signal for the vertical blanking periods. A memory of six compound H lines is further necessary for a countermeasure for the drop-out. In addition, in order to execute the time base compression and conversion as shown in Fig. 7, a costly memory of 18H lines is necessary on the reproducing side.

It is, therefore, an object of the present invention to provide a recording and reproducing system using a narrow band recording medium of a high vision signal which can easily use the vertical blanking periods of the high vision signal and can reduce a necessary memory capacity.

According to the invention, there is provided a recording and reproducing system in which one luminance signal and two color difference signals representative of a single color video signal are respectively time-base expanded, the two color difference signals are line sequenced and combined to the luminance signal on a horizontal line unit basis to thereby convert the single color video signal into three channel signals constituted by compound H lines, and thereafter the resultant channel signals are recorded on a recording medium and reproduced therefrom, wherein the horizontal line numbers of the luminance signal and the color difference signals which are included in one compound horizontal line of each of the channel signals are equal to each other.

Since the original horizontal line numbers of the luminance component and the color difference components in one compound horizontal line which are included in each of the three channel signals are equal, the areas of the vertical blanking periods of the three channel signals on the recording medium have simple shapes. The total capacity of the memories in the recording and reproducing systems can be reduced.

According to another aspect of the present invention there is provided a method for recording a single color video signal comprising one luminance and two color difference signals, the method comprising: respectively time-base expanding the two color difference signals and the luminance signal; line sequencing and combining the two color difference signals with the luminance signal on a horizontal line unit basis to thereby convert the single color video signal into three channel signals comprising compound horizontal lines; and recording the resultant channel signals on a recording medium, wherein the horizontal line numbers of the luminance signal and the colour difference signal which are included in each compound horizontal line of the channel signals are equal to each other.

According to another aspect of the present invention, there is provided a method for reproducing an output color video signal from three channel signals recorded on a recording medium, the channel signals comprising compound horizontal lines made up of a luminance signal and a color difference signal from an original, single color video signal which comprised a luminance signal and two color difference signals, the horizontal line numbers of the luminance signal and the color difference signal which are included in each compound horizontal line of the channel signals being equal to each other, the method comprising; respectively time-base decreasing the color difference signal and the luminance signal in each compound horizontal line; and line sequencing and splitting the three channel signals on a horizontal line unit basis to thereby convert the channel signals into an output color video signal comprising a color difference signal and a luminance signal.

An embodiment of the invention will now be described by way of example only and with reference to the accompanying drawings, in which:
Figs. 1 and 6 are block diagrams showing recording and reproducing apparatuses for recording and reproducing color component signals via a recording medium;
Figs. 2(A) to 2(C) are time charts showing formats of channel signals appearing in a recording and reproducing method which is executed by the apparatuses in Figs. 1 and 6;
Fig. 3 is a circuit diagram showing a prior example of a time base expanding and converting circuit in the apparatus of Fig. 1;
Figs. 4(A) to 4(R) and Figs. 5(A) to 5(F) are time charts for showing the operation of the circuit diagram of Fig. 3;
Fig. 7 is a circuit diagram showing a prior example of a time base compressing and converting circuit in the apparatus of Fig. 6;
Fig. 8 is a time chart for explaining the operation of the circuit diagram of Fig. 7;
Fig. 9 is a time chart showing a state where a drop-out occurs in the signals shown in Fig. 2;
Fig. 10 is a circuit diagram showing an example of a drop-out compensating circuit;
Figs. 11 and 13 are circuit diagrams showing apparatus modified from the apparatus of Figs. 1 and 6, by adding thereto delay circuits, respectively;
Fig. 12 is a time chart showing recording formats of channel signals recorded by the apparatus of Figs. 11 and 13;
Fig. 14 is a format diagram showing distributions on a recording medium of vertical blanking periods of the channel signals shown in Figs. 2(A), 2(B), and 2(C) and Figs. 8(A), 8(B), and 8(C);
Fig. 15 is a block diagram showing a channel signal producing apparatus on the recording side to execute the component signal recording and reproducing method according to the invention;
Figs. 16(A) to 16(R) and Figs. 17(A) to 17(C) are time charts for explaining the operation of the apparatus of Fig. 15;
Fig. 18 is a format diagram showing distributions on the recording medium of the channel signals recorded by the apparatus of Fig. 15;
Fig. 19 is a circuit diagram showing a time base compressing and converting circuit for converting the channel signals recorded by the apparatus of Fig. 15 into a luminance signal and a color signal after the channel signals are read;
Fig. 20 is a time chart showing the operation of the circuit of Fig. 19; and
Figs. 21(A), 21(B), and 21(C) are time charts showing formats of the channel signals which are modified from the channel signals shown in Figs. 20(A), 20(B), and 20(C) by applying predetermined delays and are to be recorded on a recording medium.

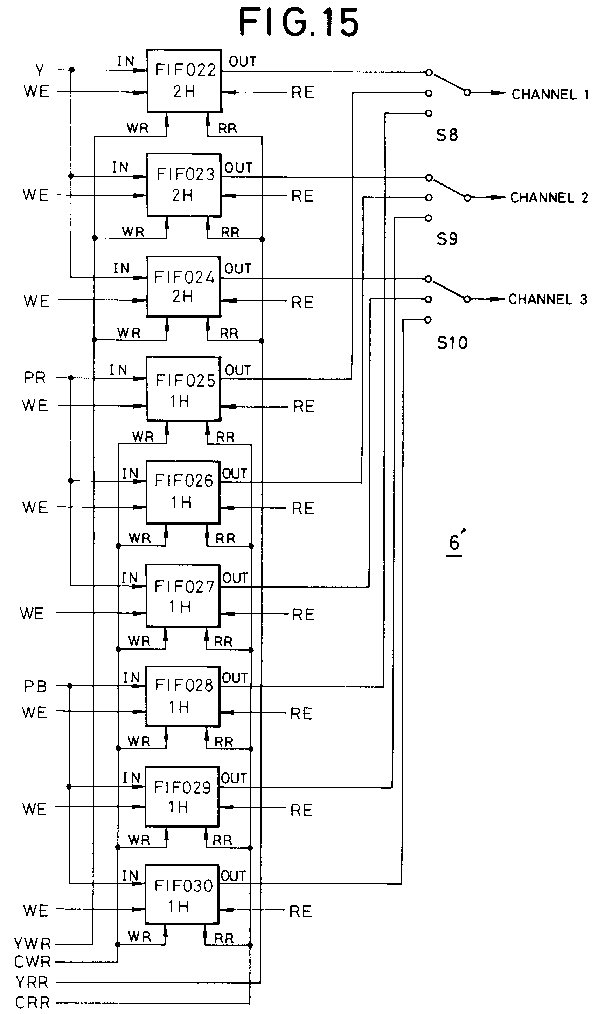

Fig. 15 shows a channel signal producing circuit 6' according to the invention. The circuit 6' has the FIFOs 22 to 24 each of which has a capacity of 2H lines and can hold the Y components of 2H lines. The circuit 6' also has FIFOs 25 to 30 each of which has a capacity of 1H line and can hold the PR and PB components. Each FIFO has the write enable terminal WE and the read enable terminal RE in addition to input and output terminals IN and OUT and also has the write reset terminal WR and the read reset terminal RR. The Y signal is supplied to the input terminals IN of the FIFOs 22 to 24. The PR signal is supplied to the input terminals IN of the FIFOs 25 to 27. The PB signal is supplied to the input terminals IN of the FIFOs 28 to 30. The OUT terminals of the FIFOs 22, 25, and 28 are connected to a fixed contact of a change-over switch S₈. The OUT terminals of the FIFOs 23, 26, and 29 are connected to a fixed contact of a change-over switch S₉. The OUT terminals of the FIFOs 24, 27, and 30 are connected to a fixed contact of a change-over switch S₁₀.

A luminance component write reset signal YWR is supplied to the WR terminals of the FIFOs 22 to 24. The color difference component write reset signal CWR is supplied to the WR terminals of the FIFOs 25 to 30. The luminance component read reset signal YRR is supplied to the RR terminals of the FIFOs 22 to 24. The color difference component read reset signal CRR is supplied to the RR terminals of the FIFOs 25 to 30.

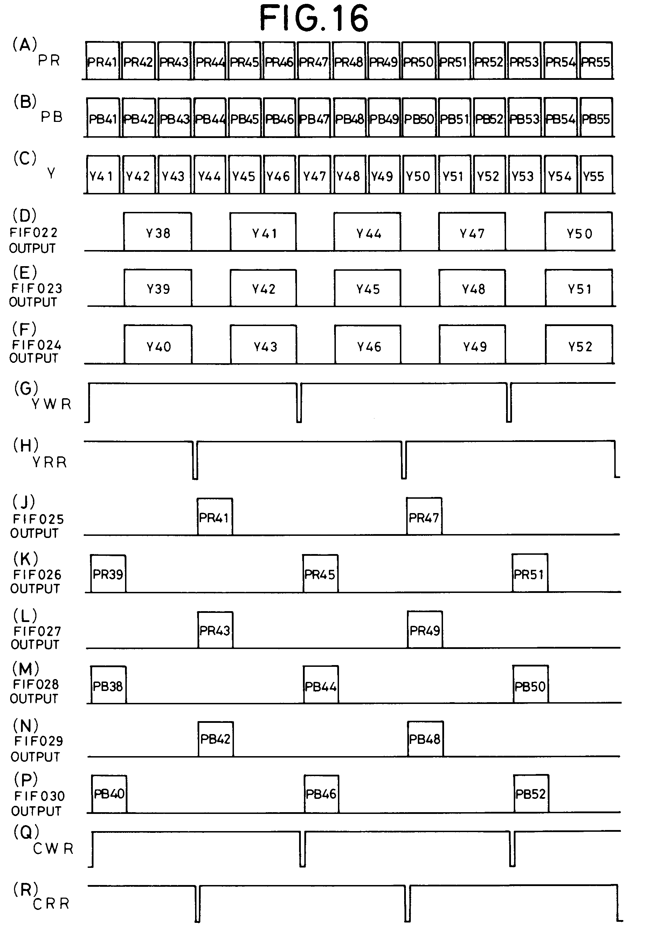

The operation of the circuit of Fig. 15 will now be described with reference to Figs. 16(A) to 16(R).

The WE signals (not shown) of the FIFOs 22 to 24 are first supplied synchronously with the original horizontal lines as shown in Figs. 16(A) to 16(C). The H lines of every other 2H periods of the luminance signal, for instance, --- Y₃₈, Y₄₁ ---; --- Y₃₉, Y₄₂ ---; --- Y₄₀, Y₄₃ --- are written into the FIFOs 22 to 24, respectively. In this instance, the write reset signal YWR as shown in Fig. 16(G) is supplied to the FIFOs 22 to 24. The read reset signal YRR as shown in Fig. 16(H) and the read enable signal RE (not shown) are supplied to the FIFOs 22 to 24. The FIFOs 22 to 24 time base expand the stored luminance components Y₃₈, Y₃₉, and Y₄₀ and simultaneously generate them as shown in Figs.16(D), 16(E), and 16(F). In this instance, for example, the luminance component Y₄₄ is also written into the FIFO 22 for a period of time when the luminance component Y₄₁ written into the FIFO 22 by supplying the WE signal is read out from the FIF0 22 by supplying the RE signal. The FIF0 22, consequently, must have such a memory capacity that the data of 2H can be stored. The same shall also be similarly applied to the other FIFOs 23 and 24.

The color difference signals PR and PB which have previously been subjected to the line sequencing processes are supplied to the FIFOs 25 to 27 and 28 to 30. The color difference component write reset signal CWR shown in Fig. 16(Q) and the write enable signal WE (not shown) corresponding to each horizontal line interval of the color difference signals after completion of the line sequencing processes are supplied to the FIFOs 25 to 27 and 28 to 30, respectively. The color difference signals, for example, --- PR₄₁, PR₄₇, PR₅₃ ---; --- PR₃₉, PR₄₅, PR₅₁ ---; --- PR₄₃, PR₄₉, PR₅₅ ---; ---PB₃₈, PB₄₄, PB₅₀ ---; --- PB₄₂, PB₄₈, PB₅₄ ---; and ---PB₄₀, PB₄₆, PB₅₂ --- are sequentially written into the above FIFOs. The color difference components from the FIFOs 25 to 30 are read out by the color difference component read reset signal CRR as shown in Fig. 16(R) and the color difference component read enable signal RE (not shown). The color difference signals are read out at timings shown in Figs. 16(J) to 16(P). In this instance, for example, the color difference component PR₄₁ written into the FIFO 25 by the WE signal is read out from the FIFO 25 by the RE signal until the next color difference component PR₄₇ is written. As a memory capacity of the FIFO 25, therefore, it is sufficient to set a capacity such that the data of 1H can be stored. The same shall be also similarly applied to the other FIFOs 26 to 30.

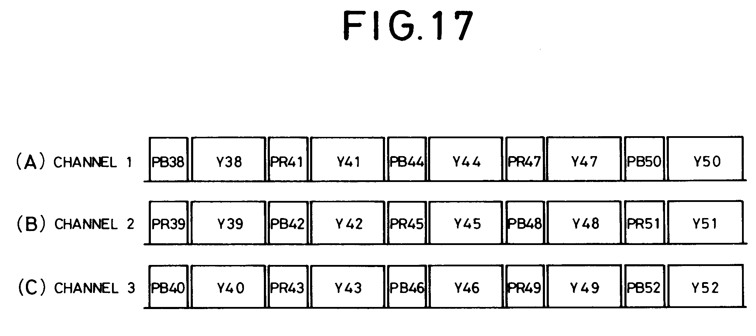

The change-over switches S₈ to S₁₀ sequentially repeat the outputs of the FIFOs 22, 25, and 28, the outputs of the FIFOs 23, 26, and 29, and the outputs of the FIFOs 24, 27, and 30 as signals of the channels 1, 2, and 3, thereby forming the channel 1, 2, 3 signals as shown in Figs. 17(A), 17(B), and 17(C). As will be obviously understood from Figs. 17(A) to 17(C), in the channel 1, 2, 3 signals produced according to the invention, the original H line numbers of the color difference components and the luminance signal constructing the compound H lines are equal to each other. The resultant channel 1, 2, and 3 signals are recorded onto the adjacent tracks on a recording medium such as an optical disk or onto three different recording media.

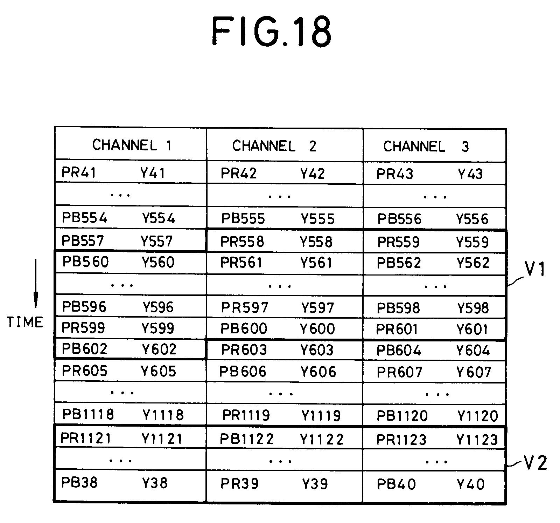

Fig. 18 shows distributions on the recording medium of the channel 1, 2, 3 signals which are recorded as mentioned above. The vertical blanking periods are indicated by areas V₁ and V₂ surrounded by thick solid lines. As will be also obviously understood from the distribution states, the channel signals are based on the component signals of the high vision signal according to the invention, and those channel signals are recorded onto the adjacent tracks, so that the areas of the vertical blanking periods have simple shapes. Even when various control signals or information signals are inserted into the vertical blanking periods, all of the read timing signals for the three channels are generated in a similar manner. A construction of a reading circuit can be relatively small and the costs can be reduced.

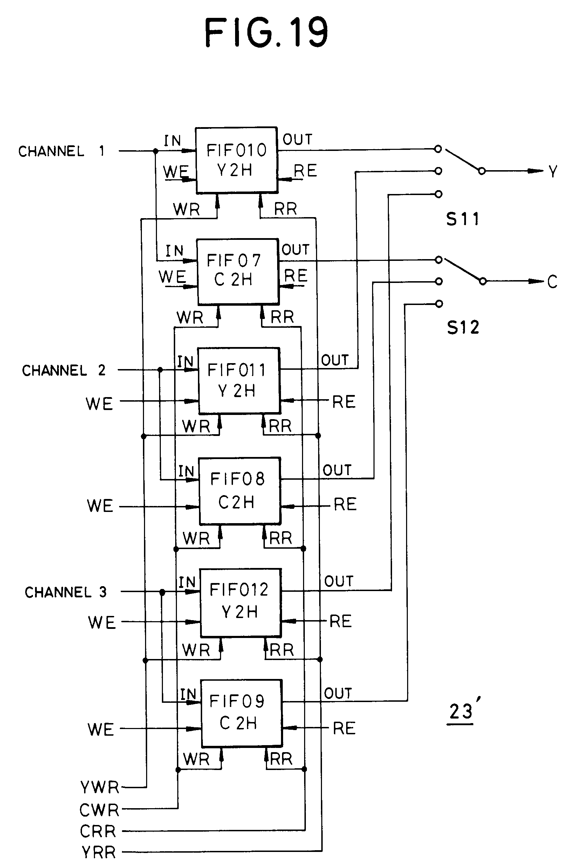

When the high vision signals recorded onto three adjacent tracks of the recording media or onto the three recording media are reproduced as channel 1, 2, 3 signals, the channel 1, 2, 3 signals are read by a recording medium playing apparatus such as an optical disk player. The read channel 1, 2, 3 signals are supplied to a time base compressing and converting circuit 23' as shown in Fig. 19. In case the channel 1, 2, 3 signals are D/A converted and thenrecorded as analog signals, the read channel 1, 2, 3 signals are A/D converted and supplied as digital signals to the time base compressing and converting circuit 23'.

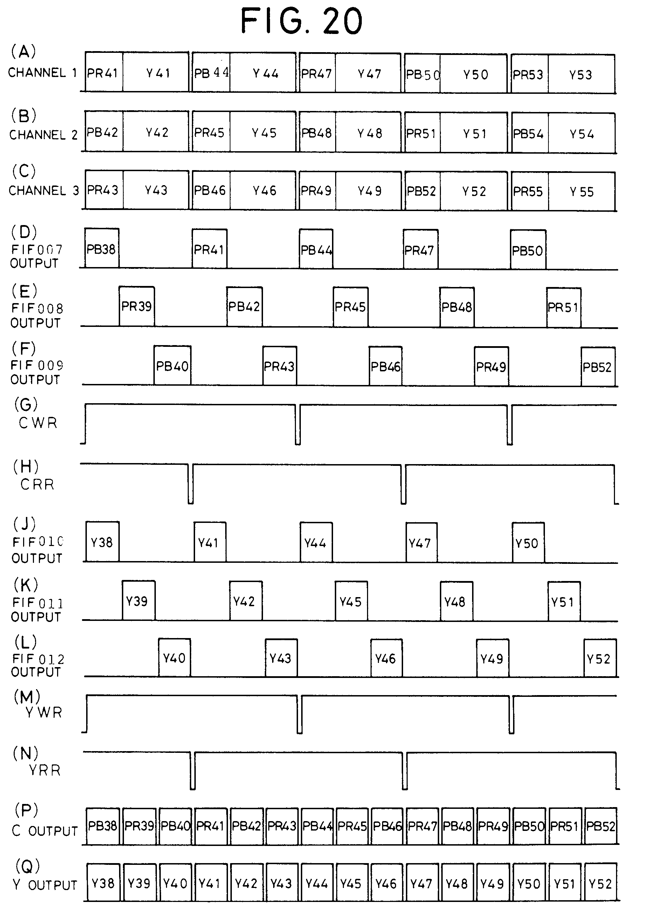

The time base compressing and converting circuit 23' includes the FIFOs 7 to 12. The channel 1 signal is supplied to the FIFOs 7 and 10. The channel 2 signal is supplied to the FIFOs 8 and 11. The channel 3 signal is supplied to the FIFOs 9 and 12. Since the write enable signal WE (not shown) is supplied in correspondence to each compound H interval, only the color difference components of each channel signal are stored into the FIFOs 7, 8, and 9 and are read out as shown in Figs. 20(D), 29(E), and 20(F) synchronously with the read enable signal RE (not shown). In this instance, the color difference signal write reset signal CWR and color difference signal read reset signal CRR as shown in Figs. 20(G) and 20(H) are alternately supplied to the FIFOs 7, 8, and 9.

The write enable signal WE (not shown) is also supplied to the FIFOs 10, 11, and 12 and only the luminance components of the channel signals are written therein. After one compound H line after the writing they are read out therefrom while being compressed in time-base as shown in Figs. 19(J), 19(K), and 19(L) synchronously with the read enable signal RE (not shown) and are read out. At that time, the luminance signal write reset signal YWR and the luminance signal read reset signal YRR as shown in Figs. 20(M) and 20(N) are alternately supplied to the FIFOs 10 to 12.

The color difference components and luminance components which have been read out from the FIFOs 7 to 12 are reproduced as the original luminance signal Y and color signal C because of the operations of the change-over switches S₁₁ and S₁₂.

When comparing those signals of Figs. 8(A) to 8(C) with those signals of Figs. 20(A) to 20(C) which are produced in the apparatus according to the invention, it will be understood that either one of the color components appears at every 6H-line interval in the former art and at every 3H-line interval in the embodiment according to the invention. On the reproducing side, therefore, the operation unit of the FIFOs of the color signal C in the prior example is equal to a 12H-line unit and the capacity of each FIFO is set to a value of 4H lines. According to the invention, however, the operation unit of the FIFOs of the color signal C is equal to a 6H-line unit and the capacity of each FIFO is set to a value of 2H lines. Therefore, the total capacity of the FIFOs in the time base converting section on the reproducing side is equal to a value of 18H lines in the prior example, while the total capacity according to the invention is equal to a value of 12H lines, so that the costs can be reduced.

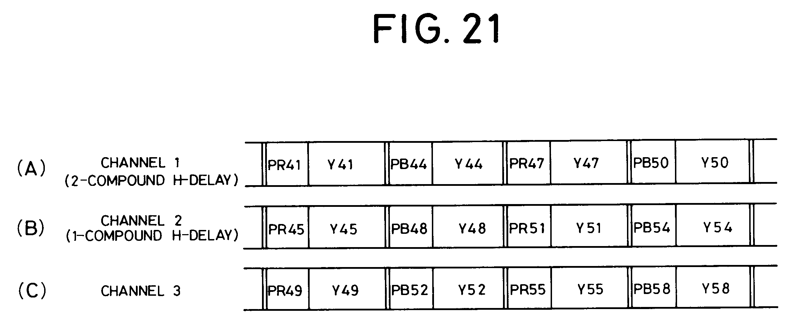

In case the channel 1, 2, 3 signals shown in Figs. 17(A), 17(B), and 17(C) are simultaneously recorded onto the adjacent tracks of a single recording medium, in order to avoid an adverse influence by the drop-out which has been described with reference to Fig. 10, it is desirable that a delay of two compound horizontal lines is given to the channel 1 signal and a delay of one compound horizontal line is given to the channel 2 signal so as to obtain the channel 1, 2, 3 signals as shown in Figs. 21(A), 21(B), and 21(C) and those channel signals are recorded onto the adjacent tracks of the recording medium.

A recording system for recording those channel signals according to the present invention can be obtained by replacing the 4-compound H-line delay and the 2-compound H-line delay in Fig. 11 by a 2-compound H-line delay and a 1-compound H-line delay respectively. A reproducing system for reproducing those channel signals according to the invention can be formulated by replacing the 4-compound H-line delay and the 2-compound H-line delay in Fig. 13 by a 2-compound H-line delay and a 1-compound H-line delay respectively. It is now apparent that only three compound H-line delay is needed in the system according to the invention but six(6) compound H-line delay is needed in the prior example.

Since such delays are ordinarily accomplished by using memories, the system according to the invention is much economical.

As will be obviously understood from the above description, the vertical blanking periods can be easily and effectively utilized, since the line numbers of the original luminance signal and the color difference horizontal line signals which construct the compound horizontal line of each of the three channel signals are equalized according to the recording and reproducing method of the high vision signal of the invention,. In the case of recording the three channel signals onto the adjacent tracks, moreover, the delay time which is needed for a countermeasure for the drop-out can be reduced. The capacity of the FIFO to convert the time base can be also reduced.

## Claims

1. A recording and reproducing system in which one luminance signal and two color difference signals which correspond to a single color video signal are respectively time-base expanded, the two color difference signals being line sequenced and combined with the luminance signal on a horizontal line unit basis to thereby convert the single color video signal into three channel signals comprising compound horizontal lines, and thereafter the resultant channel signals are recorded on a recording medium and reproduced therefrom,
wherein the horizontal line numbers of the luminance signal and the color difference signal which are included in each compound horizontal line of the channel signals are equal to each other.

2. A recording and reproducing system as claimed in claim 1, wherein the data supplied to the channel signals comprises data from the even numbered horizontal lines of one of the color difference signals and data from the odd numbered horizontal lines of the other color difference signal, and wherein the color difference signals are line sequenced and combined with the luminance signal by delay means, whereby data from three successive horizontal lines are simultaneously output to the three channel signals.

3. A recording and reproducing system as claimed in claim 2, comprising two groups of three delays, one group for each of the color difference signals, a first delay in each group delaying a horizontal line data by a period equivalent to two horizontal lines of the original, single color video signal, relative to a second delay in the group, and the third delay in the group delaying a horizontal line data by a period equivalent to one horizontal line of the original, single color video signal, relative to the second delay.

4. A method for recording a single color video signal comprising one luminance and two color difference signals, the method comprising:
respectively time-base expanding the two color difference signals and the luminance signal;
line sequencing and combining the two color difference signals with the luminance signal on a horizontal line unit basis to thereby convert the single color video signal into three channel signals comprising compound horizontal lines; and
recording the resultant channel signals on a recording medium, wherein the horizontal line numbers of the luminance signal and the colour difference signal which are included in each compound horizontal line of the channel signals are equal to each other.

5. A method for recording as claimed in claim 4, wherein the data recorded in the channel signals comprises data from the even-numbered horizontal lines of one of the colour difference signals and data from the odd-numbered horizontal lines of the other color difference signal, and wherein the step of line sequencing and combining the color difference signals with the luminance signal includes a step of delaying the signals, whereby data from three successive horizontal lines are simultaneously output to the three channel signals.

6. A method for recording as claimed in claim 5, wherein the step of delaying the signals comprises:
dividing the color difference signals into two groups of three horizontal line data, one group for each of the color difference signals;
delaying a second horizontal line data in each group by a period equivalent to an integral number of horizontal lines of the original, single color video signal;
delaying a first horizontal line data in the group by a period equivalent to two horizontal lines of the original, single color video signal, relative to the delay of the second horizontal line data in the group; and
delaying a third horizontal line data in the group by a period equivalent to one horizontal line of the original, single color video signal, relative to the delay of the second horizontal line data in the group.

7. A method for reproducing an output color video signal from three channel signals recorded on a recording medium, the channel signals comprising compound horizontal lines made up of a luminance signal and a color difference signal from an original, single color video signal which comprised a luminance signal and two color difference signals, the horizontal line numbers of the luminance signal and the color difference signal which are included in each compound horizontal line of the channel signals being equal to each other, the method comprising;
respectively time-base decreasing the color difference signal and the luminance signal in each compound horizontal line; and
line sequencing and splitting the three channel signals on a horizontal line unit basis to thereby convert the channel signals into an output color video signal comprising a color difference signal and a luminance signal.

8. A method for reproducing as claimed in claim 7, wherein the data recorded in the channel signals and reproduced in the color difference signal of the output color video signal comprises data from the even-numbered horizontal lines of one of the color difference signals of the original, single color video signal and data from the odd-numbered horizontal lines of the other color difference signal of the original, single color video and wherein the step signal of the line sequencing and splitting the three channel signals includes a step of delaying the signals, whereby data from three simultaneous compound horizontal lines are successively output to the output color video signal.

9. A method for reproducing as claimed in claim 8, wherein the step of delaying the three simultaneous compound horizontal lines comprises:
delaying a horizontal line data in the first channel signal by a period equivalent to an integral number of horizontal lines of the output color video signal;
delaying a horizontal line in the second channel signal by a period equivalent to one horizontal line of the output color video signal, relative to the delay of the first channel signal; and
delaying a horizontal line data in the third channel signal by a period equivalent to two horizontal lines of the output color video signal, relative to the delay of the first channel signal.
